# FASCICULE DE BREVET EUROPEEN

(11) **EP 2 713 521 B1**
(45) Date de publication et mention de la délivrance du brevet: **09.12.2015**
(21) Numéro de dépôt: 13179680.7
(22) Date de dépôt: 08.08.2013
(51) Int. Cl.: H04B 1/08, G06F 9/44, B60R 11/02

(54) **Equipement électronique audio/vidéo, tel qu'un autoradio multimédia, apte à être installé dans un véhicule automobile.**
Elektronisches Audio-/Videogerät, insbesondere Multimedia-Autoradio zum Einbau in ein Kraftfahrzeug
Audio/video electronic equipment, such as a multimedia car radio, suitable for installation in a motor vehicle

(30) Priorité: 18.09.2012 FR 1258758
(43) Date de publication de la demande: 02.04.2014
(73) Titulaire: PARROT AUTOMOTIVE, 75010 Paris (FR)
(72) Inventeur: Pinto, Guillaume, 75004 Paris (FR)
(74) Mandataire: Dupuis-Latour, Dominique

(56) Documents cités:
- WO-A1-2011/062583
- US-A1- 2004 033 821
- US-A1- 2009 189 373
- US-A1- 2009 262 045

## Description

L'invention concerne un équipement électronique audio/vidéo, tel qu'un autoradio multimedia, apte à être installé dans un véhicule automobile.

L'application aux autoradios, si elle est particulièrement avantageuse, n'est toutefois pas limitative de l'invention qui, comme on le comprendra, peut être appliquée à de très nombreux types d'autres appareils électroniques utilisables à bord d'un véhicule automobile.

Les générations récentes de ces équipements mettent en oeuvre de très nombreuses fonctions, intégrant dans un même appareil des fonctions de téléphonie mains libres et des fonctions multimedia avec couplage à des appareils ou supports mémoire extérieurs et des fonctions GPS de géopositionnement par satellite. Les équipements les plus récents intègrent également des éléments de connectivité mobile permettant notamment l'accès à Internet pour assurer des services de messagerie, de transfert de fichiers musicaux en *streaming,* etc.

Les appareils de la famille *Parrot Asteroid* (marque déposée) commercialisés par Parrot SA, Paris, France, sont des exemples typiques de tels équipements.

La mise en oeuvre de ces multiples fonctionnalités requiert un microcontrôleur piloté par un système d'exploitation (OS) qui peut notamment être un OS conçu pour des terminaux mobiles tel qu'*Android,* qui est un logiciel *open source* incluant tous les utilitaires requis pour mettre en oeuvre un terminal mobile, intégrer des applications existantes ou téléchargeables, interagir avec la géolocalisation du terminal, etc.

Le terme de "système d'exploitation" doit être entendu ici au sens précis qui lui est donné en informatique, c'est-à-dire un logiciel de contrôle d'ordinateur de haut niveau, pouvant être interfacé à divers logiciels applicatifs extérieurs. L'OS gère l'allocation des ressources mémoire entre ces logiciels applicatifs, les accès de ceux-ci aux périphériques, le séquencement de leur exécution, la manipulation des fichiers, etc.

Un OS est à distinguer des micrologiciels embarqués (*firmware*) spécifiques, propres aux microcontrôleurs utilisés notamment pour multiplexer et piloter directement les équipements de bord d'un véhicule automobile, comme ce qui est par exemple divulgué dans le US 2009/0189373 A1, qui ne met en oeuvre ni OS ni logiciels applicatifs distincts.

Un inconvénient propre aux OS tient notamment au fait qu'ils ne sont pas incorporés au microcontrôleur, mais sont stockés dans une mémoire externe. De ce fait, au moment de la mise sous tension de l'équipement il est nécessaire de lire l'OS et de le charger en mémoire vive, puis d'exécuter un certain nombre d'opérations et vérifications préalables d'amorçage ou *boot*, ce qui dans le cas d'*Android* peut typiquement nécessiter 20 à 30 secondes avant que l'équipement ne devienne pleinement fonctionnel après mise en route.

Ce délai n'est pas trop gênant dans le cas d'un téléphone ou d'une tablette, qui ne sont en général pas souvent réinitialisés et dont la batterie est souvent rechargée, en général au moins une fois par jour. Il est donc possible de laisser l'OS en permanence dans son état fonctionnel sans inconvénient particulier - si ce n'est l'apparition au bout de plusieurs jours de fonctionnements plus ou moins erratiques qui imposent de temps en temps un redémarrage par extinction/réallumage de manière à remettre à zéro l'appareil et son système.

En revanche, dans le cas d'un équipement embarqué dans un véhicule automobile (comme dans le US 2004/0033821 A1), il n'est pas concevable de laisser l'équipement en permanence sous tension : à la différence d'un objet personnel tel qu'un téléphone portable, un véhicule peut en effet rester inutilisé pendant de très longues périodes, et la consommation de l'équipement à l'état allumé (typiquement quelques dizaines ou centaines de milliampères) risque à terme de décharger la batterie du véhicule.

Il est donc indispensable d'éteindre l'équipement quand le véhicule n'est pas utilisé. Mais par voie de conséquence, lorsque l'utilisateur reprendra son véhicule, l'OS de l'équipement devra être réamorcé, et l'équipement ne sera donc pas immédiatement disponible - à la différence par exemple d'un autoradio conventionnel, que le conducteur peut allumer dès qu'il s'assied dans son véhicule.

Paradoxalement, pour l'utilisateur le fait de disposer d'un équipement perfectionné se traduit par une moindre commodité d'usage du fait de cette attente, comparable à celle des anciens appareils à tubes qui ont précédé les appareils transistorisés.

L'un des buts de l'invention est de remédier à cette difficulté, en réduisant le temps d'attente nécessaire pour qu'au moment où le conducteur s'installe dans son véhicule l'équipement soit pleinement fonctionnel après réamorçage de l'OS.

Une contrainte particulière est qu'un tel équipement puisse être installé "en deuxième monte" (*aftermarket*), c'est-à-dire qu'il puisse être monté dans n'importe quel véhicule seulement avec les branchements conventionnels d'alimentation de bord, liaison à la clef de contact, etc., sans connexion particulière à l'électronique de bord du véhicule (nécessairement spécifique à ce dernier) ni à aucun détecteur externe tel que détecteur d'ouverture de porte, d'actionnement de télécommande, détecteur de présence du conducteur ou du passager par un capteur de pression incorporé au siège (comme dans le US 2009/0262045 A1), etc., dispositifs qui peuvent exister ou non et, s'ils existent, ne font l'objet d'aucune standardisation.

Par ailleurs, on sait qu'il est avantageux de réamorcer de temps à autre l'OS de l'équipement, pour éviter des comportements erratiques de l'appareil qu'il pilote.

Dans un véhicule, ce réamorçage est normalement opéré à chaque manoeuvre de la clef de contact du véhicule, de façon systématique. Mais en cas de brefs arrêts (le conducteur qui s'arrête pour poster une lettre, pour charger un colis, etc.) ce redémarrage systématique devient un inconvénient, car à chaque fois il sera nécessaire d'attendre que se soit écoulée la durée complète de réamorçage de l'OS avant que l'équipement ne revienne à son état antérieur, fonctionnel.

L'un des buts de l'invention est, aussi, de remédier à cet inconvénient.

Pour atteindre les buts précités, l'invention propose un équipement électronique apte à être installé dans un véhicule automobile, cet équipement étant du type général divulgué par le US 2009/0189373 A1 précité, c'est-à-dire comprenant : des moyens processeurs numériques, susceptibles de se trouver dans un état éteint ou dans un état fonctionnel ; une entrée de détection d'un signal de mise en marche du véhicule ; un afficheur de façade pourvu de moyens d'éclairage ; et un module de démarrage apte à contrôler les moyens d'éclairage.

L'invention concerne le cas où les moyens processeurs numériques mettent en oeuvre un système d'exploitation, qui nécessite un temps d'amorçage préalable pour passer de l'état éteint à l'état fonctionnel.

De façon caractéristique, l'équipement comprend alors un capteur apte à produire un signal de déclenchement sur détection d'une vibration. Le module de démarrage est apte, sur réception du signal de déclenchement et à partir d'un état éteint, à : i) dans un premier temps, activer les moyens processeurs numériques de manière à initier l'amorçage du système d'exploitation, mais sans activer les moyens d'éclairage, puis ii) dans un second temps, sur réception d'un signal de mise en marche du véhicule, activer les moyens d'éclairage.

Le capteur de vibrations est de préférence incorporé au boitier de l'équipement.

Très avantageusement, le module de démarrage est en outre apte, après réception d'un signal de déclenchement et en l'absence de réception ultérieure d'un signal de mise en marche du véhicule pendant une durée prédéterminée, à forcer la remise des moyens processeurs à l'état éteint. L'équipement peut notamment comprendre le module de démarrage et un module opérationnel comportant les moyens processeurs, l'afficheur et les moyens d'éclairage, ainsi que des circuits de traitement analogique et numérique des signaux audio/video. À l'état éteint, le module de démarrage est seul sous tension, le module opérationnel étant hors tension. Le module de démarrage met alors sous tension le module opérationnel sur réception du signal de déclenchement, de manière à produire un réamorçage systématique du système d'exploitation à chaque transition de l'état éteint à l'état fonctionnel.

On va maintenant décrire un exemple de mise en oeuvre du dispositif de l'invention, en référence aux dessins annexés où les mêmes références numériques désignent d'une figure à l'autre des éléments identiques ou fonctionnellement semblables.
La Figure 1 montre, de façon schématique, la configuration de l'équipement selon l'invention dans un véhicule automobile.
La Figure 2 est une vue externe en perspective d'un exemple d'équipement auquel peut être appliquée l'invention.
La Figure 3 est un schéma montrant les différents blocs fonctionnels impliqués dans la mise en oeuvre de l'invention.
La Figure 4 est un organigramme explicitant les étapes successives du fonctionnement du dispositif de l'invention.

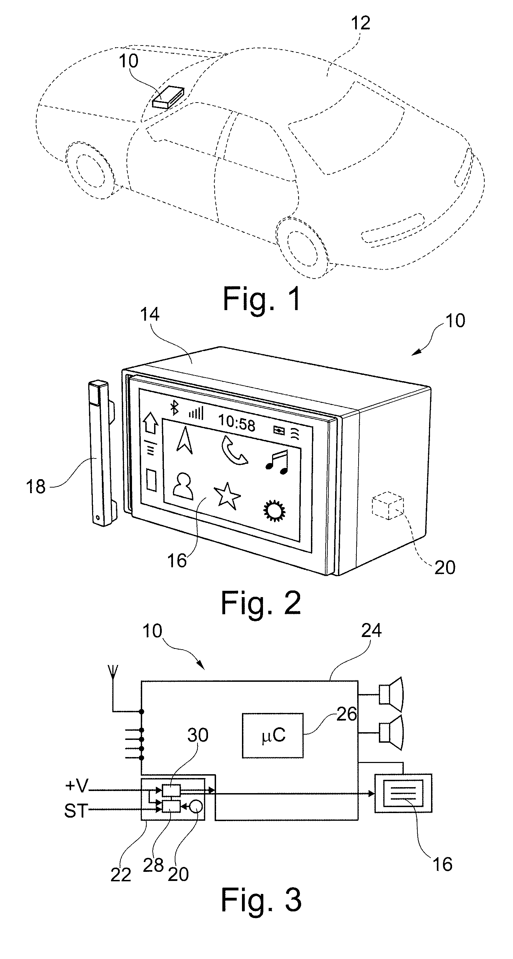

Sur les Figures 1 et 2, la référence 10 désigne de façon générale un équipement électronique audio/vidéo tel qu'un autoradio multimedia installé dans la planche de bord d'un véhicule 12.

Sur la Figure 2 on a illustré plus précisément, à titre d'exemple, la configuration extérieure correspondant au modèle *Parrot Asteroid 2DIN* de Parrot SA, Paris, France, qui se présente sous la forme d'un bloc de dimension normalisée intégrable dans la planche de bord d'un véhicule automobile, en l'espèce d'un bloc normalisé "double DIN" (en référence à la norme DIN75490/ISO7736). Un coffret 14 enferme les différents éléments électroniques, et en face frontale un afficheur à écran tactile 16 de grande dimension permet un contrôle aisé des différentes fonctions ainsi que l'affichage de listes, d'une cartographie GPS, etc. Le boitier 14 reçoit une façade amovible 18 de dimensions réduites en forme de réglette allongée verticale accolée latéralement à l'écran 16 et pourvue d'un bouton "Marche/Arrêt" pour la mise en route de l'équipement, par appui sur ce bouton après que la façade a été montée sur le boitier. Cette façade amovible 18, qui peut comprendre d'autres éléments tels que témoins lumineux, etc., contrôlés par les tensions et signaux de l'autoradio, fait ainsi office d'antivol pour l'équipement.

De façon caractéristique de l'invention, l'équipement 10 est pourvu d'un détecteur de vibrations 20, de préférence incorporé au boitier 14 de l'équipement.

Ce capteur est par exemple un capteur à microbilles tel que celui décrit dans le US 7 421 793 B2, qui ne nécessite qu'un courant permanent très faible pour opérer, de l'ordre de 50 nA, et qui est sensible à l'apparition de vibrations sans directivité particulière. Cet exemple n'est bien entendu pas limitatif, et d'autres types de capteurs peuvent être bien entendu utilisés, dès qu'ils sont en mesure de détecter l'apparition d'une vibration résultant de l'ouverture d'une portière, ou même simplement du déverrouillage à distance des portes par actionnement d'une télécommande.

Comme illustré Figure 3, le capteur de vibrations 20 fait partie d'un circuit formant un module de démarrage 22, relié à l'alimentation permanente +V du réseau de bord du véhicule ainsi qu'à la clef de contact (entrée de démarrage ST permettant de détecter la mise en route du moteur par le conducteur après que celui-ci s'est installé au poste de conduite).

Le module de démarrage 22 est alimenté en permanence mais, comme on l'a indiqué plus haut, la très faible consommation du détecteur de vibrations fait que ce module ne consomme en veille qu'une énergie infime, de l'ordre de quelques microwatts, en tout état de cause très inférieure à la consommation des divers circuits d'un véhicule restant habituellement en veille même à l'arrêt complet du véhicule.

Ce module de démarrage est interfacé avec le reste des circuits de l'équipement, rassemblés dans un module opérationnel 24 qui n'est pas alimenté lorsque le véhicule est à l'arrêt ou tant que l'interrupteur de mise en route de l'équipement n'a pas été actionné. Ce module opérationnel 24 inclut un microcontrôleur 26 avec son système d'exploitation (OS), et il est raccordé aux divers périphériques tels que l'afficheur 16, l'antenne de réception du véhicule, les haut-parleurs, etc.

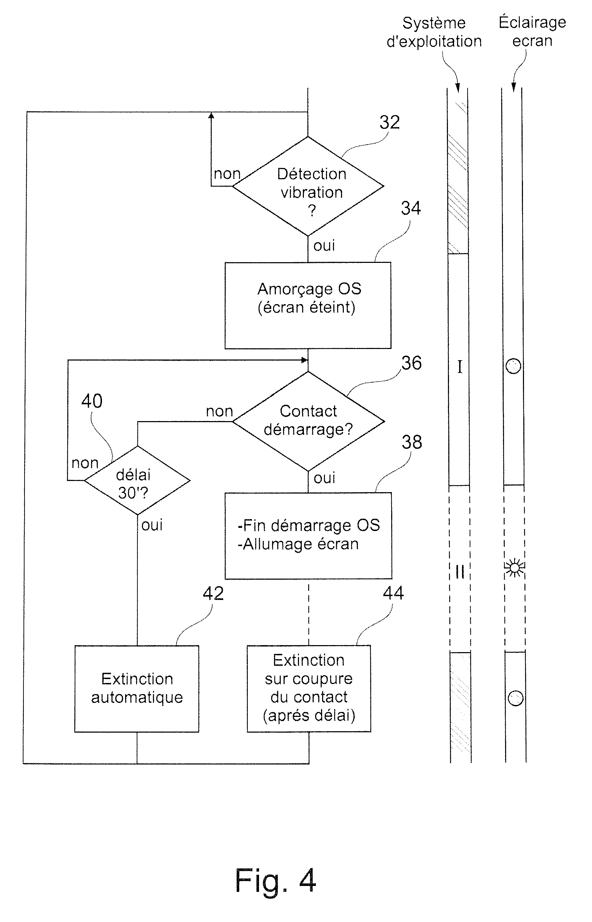

Le module de démarrage 22 comprend un circuit 28 couplé au capteur de vibrations 20, et recevant en entrée le signal ST indicateur de la mise en marche du véhicule. Ce circuit 28 pilote un circuit 30 de commande de l'alimentation du module opérationnel et de l'afficheur 16 selon un processus que l'on va maintenant décrire, en référence à la Figure 4.

Sur la Figure 4 on a illustré un organigramme des différentes étapes de mise en oeuvre du dispositif de l'invention, avec à droite l'indication de l'état de l'OS du microcontrôleur (hachuré : éteint, I : en phase d'amorçage, II : système d'exploitation opérationnel) ainsi que l'état de l'éclairage de l'écran (allumé ou éteint).

Lorsque l'utilisateur ouvre sa portière ou déverrouille les portes à distance, une vibration est produite, qui est détectée par le capteur 20 (étape 32). Cette détection a pour effet de faire démarrer l'équipement et donc d'initier l'amorçage de l'OS en tâche de fond (étape 34), mais toutefois sans activer les moyens d'éclairage de l'écran 16. Cet amorçage de l'OS peut être initié même si la façade antivol de l'autoradio n'a pas encore été mise en place.

Si l'utilisateur démarre la voiture (étape 36), alors l'écran s'allume et l'amorçage de l'OS s'achève (étape 38), mais dans un délai qui va paraitre à l'utilisateur beaucoup plus court que s'il venait juste de mettre en route l'équipement, car le temps que l'utilisateur entre dans le véhicule, qu'il se soit assis, installé, etc., la majeure partie du délai d'amorçage de l'OS se sera déjà écoulée.

Ainsi, le délai d'attente pour que l'équipement soit disponible pour jouer de la musique, activer les fonctions GPS, etc. se trouvera fortement réduit, typiquement à quelques secondes seulement, au lieu d'une trentaine de secondes dans le cas de l'amorçage d'un OS tel qu'*Android.* Cet avantage est assuré par le choix d'un capteur de vibrations, activé sans délai dès le déverrouillage ou l'ouverture de la portière, donc bien avant que le conducteur ne se soit assis sur son siège - avantage que ne procurerait pas l'utilisation d'un capteur de présence tel que le capteur de pression incorporé au siège décrit dans le US 2009/0262045 A1 précité (à supposer en outre que le véhicule soit équipé d'un tel capteur).

Il peut arriver qu'à l'étape 36 aucun contact ne soit détecté, comme dans le cas d'une vibration résultant d'un passage d'un véhicule lourd à proximité du véhicule garé, ou du fait de mouvements d'air.

Pour répondre à cette situation, un mécanisme supplémentaire est implémenté : si pendant 30 minutes (étape 40) après détection de la vibration la voiture n'a pas démarré, c'est-à-dire qu'aucun signal de clef de contact ST n'a été détecté, alors l'équipement s'éteint tout seul, automatiquement (étape 42), et attend la prochaine vibration (retour à 32).

On notera que dans ce cas, comme la voiture n'a pas été démarrée l'écran est toujours resté éteint, et que l'allumage en tâche de fond de l'équipement n'a pas été visible de l'extérieur.

Enfin, dans le cas où l'extinction de l'appareil est une extinction volontaire par coupure du contact (étape 44), le module de démarrage ne désalimente pas immédiatement l'équipement, mais se contente d'éteindre les moyens d'éclairage de l'écran 16.

Ce n'est qu'après écoulement d'un délai prédéterminé, par exemple de 30 minutes, que le module opérationnel sera totalement arrêté. Ceci permet d'éviter les extinctions/réallumages de l'équipement, induisant des réamorçages successifs de l'OS, dans des situations où le conducteur n'arrête sa voiture que pour une courte durée. Ce mécanisme permet que l'équipement soit immédiatement fonctionnel, sans délai, dès que le conducteur revient dans son véhicule et redémarre.

En revanche, lors d'un arrêt prolongé, l'équipement sera à terme totalement désactivé, ce qui permet d'éviter toute consommation excessive qui déchargerait rapidement la batterie du véhicule à l'arrêt. D'autre part, ceci assure que l'OS sera systématiquement réamorcé, avec remise à zéro complète de l'équipement à chaque utilisation.

## Revendications

1. Un équipement électronique audio/video (10), tel qu'un autoradio multimedia, apte à être installé dans un véhicule automobile (12), cet équipement comprenant :
- des moyens processeurs numériques (26), susceptibles de se trouver dans un état éteint ou dans un état fonctionnel ;
- une entrée de détection d'un signal de mise en marche du véhicule (ST) ;
- un afficheur de façade (16) pourvu de moyens d'éclairage ; et
- un module de démarrage (22) apte à contrôler les moyens d'éclairage, **caractérisé en ce que** :
- les moyens processeurs numériques (26) incluent un système d'exploitation ;
- le système d'exploitation nécessite un temps d'amorçage préalable pour passer de l'état éteint à l'état fonctionnel ;
- l'équipement comprend en outre un capteur (20) apte à produire un signal de déclenchement sur détection (32) d'une vibration ; et
- le module de démarrage (22) est apte, sur réception du signal de déclenchement et à partir d'un état éteint, à :
i) dans un premier temps (I), activer (34) les moyens processeurs numériques de manière à initier l'amorçage du système d'exploitation, mais sans activer les moyens d'éclairage,
ii) puis dans un second temps (II), sur réception (36) d'un signal de mise en marche du véhicule, activer les moyens d'éclairage (38).

2. L'équipement de la revendication 1, dans lequel le module de démarrage est en outre apte, après réception du signal de déclenchement et en l'absence (40) de réception ultérieure du signal de mise en marche du véhicule pendant une durée prédéterminée, à forcer (42) la remise des moyens processeurs numériques à l'état éteint.

3. L'équipement de la revendication 1, dans lequel :
- l'équipement comprend :
• ledit module de démarrage (22), et
• un module opérationnel (24) comportant les moyens processeurs numériques (26), l'afficheur (16) et les moyens d'éclairage, ainsi que des circuits de traitement analogique et numérique des signaux audio/video,
- à l'état éteint le module de démarrage est seul sous tension, le module opérationnel étant hors tension, et
- le module de démarrage est en outre apte à mettre sous tension le module opérationnel sur réception du signal de déclenchement,
de manière à produire un réamorçage systématique du système d'exploitation à chaque transition de l'état éteint à l'état fonctionnel.

4. L'équipement de la revendication 1, dans lequel le capteur de vibrations (20) est incorporé au boitier (14) de l'équipement.

## Patentansprüche

1. Elektronisches Audio-/Videogerät (10), insbesondere ein Multimedia-Autoradio zum Einbau in ein Kraftfahrzeug (12), wobei dieses Gerät Folgendes aufweist:
- digitale Verarbeitungsmittel (26), die sich in einem ausgeschalteten Zustand oder in einem Funktionszustand befinden können;
- einen Eingang zur Detektion eines Anlasssignals des Fahrzeugs (ST);
- eine Vorderseitenanzeige (16), die mit Beleuchtungsmitteln versehen ist; und
- ein Einschaltmodul (22) zum Steuern der Beleuchtungsmittel;
**dadurch gekennzeichnet, dass**:
- die digitalen Verarbeitungsmittel (26) ein Betriebssystem aufweisen;
- das Betriebssystem eine vorherige Anfahrzeit erfordert, um vom ausgeschalteten Zustand in den Funktionszustand überzugehen;
- das Gerät ferner einen Sensor (20) aufweist, der geeignet ist, beim Ermitteln (32) einer Vibration ein Auslösesignal zu erzeugen; und
- das Einschaltmodul (22) geeignet ist, beim Empfang des Auslösesignals und ausgehend von einem ausgeschalteten Zustand:
i) zu einem ersten Zeitpunkt (I) die digitalen Verarbeitungsmittel derart zu aktivieren (34), dass das Anfahren des Betriebssystems eingeleitet wird, aber ohne die Beleuchtungsmittel zu aktivieren,
ii) danach zu einem zweiten Zeitpunkt (II) beim Empfang (36) eines Anlasssignals des Fahrzeugs die Beleuchtungsmittel (38) zu aktivieren.

2. Gerät nach Anspruch 1, wobei das Einschaltmodul ferner geeignet ist, nach dem Empfang des Auslösesignals und beim Nichtvorhandensein (40) eines späteren Empfangs des Anlasssignals des Fahrzeugs während einer vorbestimmten Dauer das Rückstellen der digitalen Verarbeitungsmittel in den ausgeschalteten Zustand zu erzwingen (42).

3. Gerät nach Anspruch 1, wobei:
- das Gerät Folgendes aufweist:
• das Einschaltmodul (22) und
• ein Betriebsmodul (24), das digitale Verarbeitungsmittel (26), die Anzeige (16) und die Beleuchtungsmittel sowie analoge und digitale Schaltungen zur Verarbeitung von Audio-/Videosignalen aufweist,
- im ausgeschalteten Zustand einzig das Einschaltmodul unter Spannung steht, wobei das Betriebsmodul spannungslos ist, und
- das Einschaltmodul ferner geeignet ist, das Betriebsmodul beim Empfang des Auslösesignals unter Spannung zu setzen,
derart, dass ein systematisches Wiederanfahren des Betriebssystems bei jedem Übergang vom ausgeschalteten Zustand in den Funktionszustand erzeugt wird.

4. Gerät nach Anspruch 1, wobei der Vibrationssensor (20) in das Gehäuse (14) des Geräts aufgenommen ist.

## Claims

1. An audio/video electronic device (10), such as a multimedia car radio, adapted to be installed in an automotive vehicle (12), said device comprising:
- digital processor means (26), liable to be in a power-off state or an operational state;
- an input for the detecting of a vehicle start signal (ST) ;
- a front display (16) provided with lighting means; and
- a starting module (22) adapted to control the lighting means,
**characterized in that**:
- the digital processor means (26) include an operating system;
- the operating system requires a previous boot time to pass from the power-off state to the operational state;
- the device further comprises a sensor (20) adapted to produce a signal (32) of triggering upon detection of a vibration; and
- the starting module (22) is adapted, upon reception of the triggering signal and from a power-off state:
i) in a first time (I), to activate (34) the digital processor means so as to initiate the boot of the operating system, but without activating the lighting means,
ii) then, in a second time (II), upon reception (36) of a vehicle start signal, to activate the lighting means (38).

2. The device of claim 1, wherein the starting module is further adapted, after reception of the triggering signal and in the absence (40) of later reception of the vehicle start signal for a predetermined duration, to force (42) the digital processor means to go back to the power-off state.

3. The device of claim 1, wherein:
- the device comprises:
. said starting module (22), and
. an operational module (24) including the digital processor means (26), the display (16) and the lighting means, as well as circuits for the analog and digital processing of the audio/video signals,
- in the power-off state, the starting module is alone to be powered-on, the operational module being poweredoff, and
- the starting module is further adapted to power-on the operational module upon reception of the triggering signal,
so as to produce a systematic reset of the operating system at each transition from the power-off state to the operational state.

4. The device of claim 1, wherein the vibration sensor (20) is incorporated in the casing (14) of the equipment.
